# EUROPEAN PATENT SPECIFICATION

(11) **EP 1 454 501 B1**
(45) Date of publication and mention of the grant of the patent: **10.09.2008**
(21) Application number: 02793643.4
(22) Date of filing: 13.12.2002
(51) Int. Cl.: H04Q 7/22, H04L 29/06, H04L 29/12

(54) **METHOD AND GATEWAY FOR SENDING INSTANT MESSAGES BETWEEN USERS CONNECTED TO DIFFERENT NETWORKS**
VERFAHREN UND GATEWAY ZUR SENDUNG VON MOMENTANEN NACHRICHTEN ZWISCHEN BENUTZERN UNTERSCHIEDLICHER NETZWERKE
PROCEDE ET PASSERELLE POUR L'ENVOI DE MESSAGES INSTANTANES ENTRE DES UTILISATEURS APPARTENANT A DES RESEAUX DIFFERENTS

(30) Priority: 14.12.2001 SE 0104226
(43) Date of publication of application: 08.09.2004
(73) Proprietor: ORACLE INTERNATIONAL CORPORATION, Redwood Shores, CA 94065 (US)
(72) Inventor: KHARTABIL, Hisham, FIN-00100 HELSINKI (FI); LEHTO, Ville, FIN-00260 HELSINKI (FI)
(74) Representative: Winblad, Hans Peter
(86) International application number: PCT/SE2002/002322
(87) International publication number: WO 2003/053083

(56) References cited:
- WO-A1-99/35811
- US-A- 5 640 400
- US-A- 5 946 629

## Description

### Technical Field

The present invention relates to a method of sending an instant message as defined in the preamble of claim 1.

The invention also concerns a gateway as defined in the preamble of claim 6, and a computer program product according to the preamble of claim 5.

### Background and Prior Art

Instant messaging is currently the fastest growing means of communication in the world The concept of instant messaging covers small simple messages for immediate delivery to the recipient.

Session Initiation Protocol (SIP) is an open IETF standard, in which an end-user is provided with only one address for all interaction needs, ranging from instant messaging to video conferencing and gaming. It is independent of the underlying network, transport protocol or types of end-user terminal. SIP is an application-layer control (signalling) protocol for creating, modifying and terminating sessions with one or more participants. These sessions include Internet telephone calls, multimedia distribution and multimedia conferences. SIP invitations are used to create sessions. These invitations carry session descriptions which allow participants to agree on a set of compatible media types. SIP makes use of proxy servers to help route requests to a user's current location, assist in firewall traversal, and provide features to users. SIP also provides a registration function that allows them to upload their current location for use by proxy servers.

The concept of Presence is essential. Presence is a means for finding, retrieving and subscribing to changes to the presence information of other users. Mobile Presence is characterized by three types of information: location, status (availability) and means. Location indicates where a user is currently located, for example, at home, at work, at lunch. Status indicates availability, that is, if a user is on or off line. Means indicates the terminals currently available to the user, and their capabilities. A presence server keeps track of this information for SIP users. Mobile Presence integrates the concepts of presence over fixed and wireless networks for a wide variety of terminal types.

SIP users can send instant messages to users in other networks, including mobile telephony subscribers. An instant message sent to a mobile terminal is converted to a Short Message Service (SMS) message according to the standard of the mobile network. A problem arises, however, if the mobile subscriber wishes to reply to an instant message from a SIP user. Simply pressing the reply button will not work, since the SIP address is not known in the mobile telephone network. Replying to the first subscriber's mobile telephone number would cause the reply to be sent to the first subscriber's mobile telephone instead of the SIP client as intended.

If an instant message is sent as an SMS from a mobile phone to a SIP user, it is sent to a specific phone number, and a SIP address will be supplied in the message. Therefore, the problem does not apply in this case.

International patent publication No. WO 99/35811 discloses a router/gateway function that is arranged, inter alia, to enable communication between the data communication and telecommunications domains. In particular the router is arranged to enable connection of a computer to the Internet through a telephone connection by matching the telephone number to an IP address.

US Patent No. 5,946,629 is related to facilitating inter-network messaging, for example sending an SMS that may be received as a telefax or e-mail. This document discloses how to identify the receiving terminal, and how to perform the necessary format conversion. If the receiver wants to reply, the whole address of the message center of the sender's network must be entered manually to identify the sender.

US Patent No. 5,640 400 relates to a gateway interconnnecting two data communications networks used within a factory, the two networks having different addressing. The networks are therefore relatively static and of limited size. The gateway is arranged to assign virtual addresses in each network to all devices connected to the other network, to enable identification of all devices in both networks.

### Object of the Invention

It is an object of the invention to simplify messaging between users connected to different communications networks, for example between SIP users and mobile telephone users.

### Summary of the Invention

This object is achieved according to the invention by a method according to the preamble of claim 1,
said method further comprising the steps of:
providing a set of temporary addresses according to the second standard that can be assigned as identifiers of the first user,
when the first user sends a instant message to the second user, assigning a temporary address to the first user and storing information about the temporary address in or in connection to a a gateway node between said first and said second network
using the temporary address in conjunction with the second subscriber's address to form a unique identification of the first user.

The object is also achieved, according to the invention, by a gateway according to the preamble of claim 6,
said gateway being characterized in that the address table is arranged to hold the second address of a second user and a temporary address assigned to the first user, in such a way that the temporary address and the second address form a unique identification of the first user, and in that the gateway comprises processing means for running a computer program of a computer program product according to claim 5. The object is also achieved by a computer program product for use in such a gateway, said computer program product comprising computer readable code means stored on a computer readable medium for performing the steps of the method according to any one of the claims 1 to 4 when the computer program is run on processing means included in said gateway.

In this way, addresses may be temporarily assigned only when needed, that is, when a user in, for example, a SIP network has sent a message to a user in a GSM network. The GSM user is enabled to respond to the message. Preferably, the GSM user can send a response simply by pressing a "reply" button. Alternatively, the address of the SIP user may have to be entered manually. At the same time, using the temporary address in conjunction with the address of the second user to identify the first user enables the same temporary address to be used several times, thus reducing the number of temporary addresses needed.

In a preferred embodiment the method of the invention comprises the steps, when the second user replies, of
sending information concerning the reply to the gateway,
using the temporary address assigned to the first user to identify the first user sending the reply to the first user.

Preferably, the temporary address after a predefined period of time after is has been assigned or after it has been accessed.

Preferably, said temporarily assigned address is according to the second addressing standard.

According to the invention, the messages may be sent between two legitimate numbers according to the mobile telephony standard, for example, two GSM numbers while involving SIP client of at least one user.

### Brief Description of the Drawings

In the following the invention will be described in more detail, by way of preferred embodiments and with reference to the drawings, in which:
Figure 1 shows schematically an example network in which the invention may be used.
Figure 2 is a more detailed representation of a communications network in which the invention may be used.
Figure 3 shows an address table according to a first embodiment of the invention.
Figure 4 is a flow chart of the method of assigning temporary addresses according to the first embodiment.
Figure 5 is a flow chart of the method of using the temporary addresses according to the first embodiment.
Figures 6, 7 and 8 illustrate the address table in various situations.

### Detailed Description of Embodiments

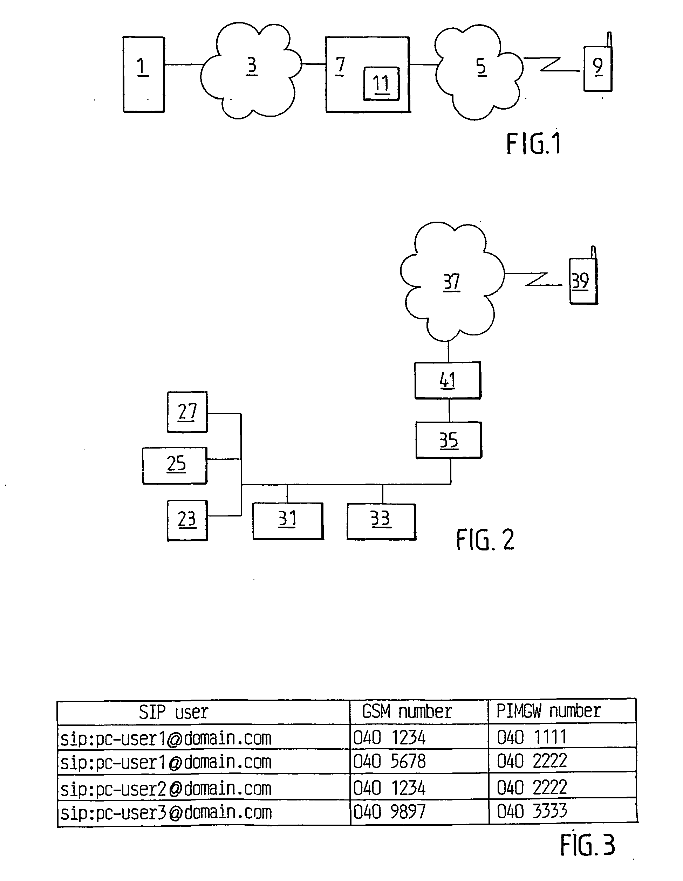

Figure 1 shows a first terminal 1 connected to a first communications network 3. The user of the first terminal 1 has a SIP address uniquely identifying the user regardless of the terminal used by the user. The communications network 3 is connected to a mobile communications network 5 through a gateway 7. In a preferred embodiment, the gateway 7 is a Presence and Instant Messaging Gateway. A table or database 11 in or in connection to the gateway 7 contains address information used to identify the address of the first terminal according to the invention.

It is assumed that the user of the first terminal 1 wishes to send an instant message to another user. The other user could be a SIP user or a mobile subscriber without a SIP address. If the other user is a SIP user, it is assumed that the presence information currently shows that the other user is available by his mobile terminal. Therefore, the instant message will be sent to the other user's mobile telephone as an SMS message. When the other user has received the SMS message, he may want to reply. According to the invention therefore, means are provided for sending the messages between two legitimate GSM numbers. This can be achieved in different ways, as explained below.

Figure 2 gives a more complete picture of the networks that may be involved according to an embodiment of the invention. A number of terminals belonging to a SIP user are connected to the Internet. The terminals include, for example, a handheld Bluetooth device 23, a PC client 25 and a SIP phone 27. The terminals 23, 25, 27 are used by the same user and can be reached, depending on the user's Presence, by the same SIP address. The terminals 23, 25, 27 are connected, through a SIP network 21, which is a logical part of the Internet. A SIP proxy server 31 and a SIP presence server 33 are connected to the SIP network. The function of the proxy server 31 is the same as usual for proxy servers. The function of the presence server 33 is to register the presence of SIP users as discussed above. One or more other networks may also be connected to the SIP network through a gateway 35. Figure 2 shows a GSM network 37, to which GSM telephones 39 are connectable. In this case, since an instant message sent from one of the SIP user's terminal 23, 25, 27 to a 39 in the GSM network 37 will be converted to an SMS message, an SMS centre 41 is connected between the gateway 35 and the GSM network 41.

Figure 3 shows the assignment of addresses according to the first embodiment of the invention. Three columns are used in the address table: The left column contains, for each message sent, the SIP address of the first user, that is, the originator of the message. The address has the format "userx@domain.com". The middle column contains the phone number of the mobile user recipient of the message. The right column contains the number temporarily assigned to the first user. As can be seen, the temporary number has the same format as the mobile phone numbers in the middle column. When the mobile user replies, the temporary number and the mobile user's phone number are used to retrieve the SIP address of the first user, who is to receive the reply. The temporary number and the mobile user's phone number must uniquely define the SIP user. In the table shown in Figure 3 this could also be achieved by letting the first and second entry use the same gateway number (040 1111) and the third gateway entry use the second gateway number (040 2222).

If the same SIP user sends more than one message to the same mobile user, only one temporary number has to be assigned, and only one entry is needed in the table for the combination of SIP user and mobile user. It would of course be possible to assign new numbers each time, but it would make the table unnecessarily long.

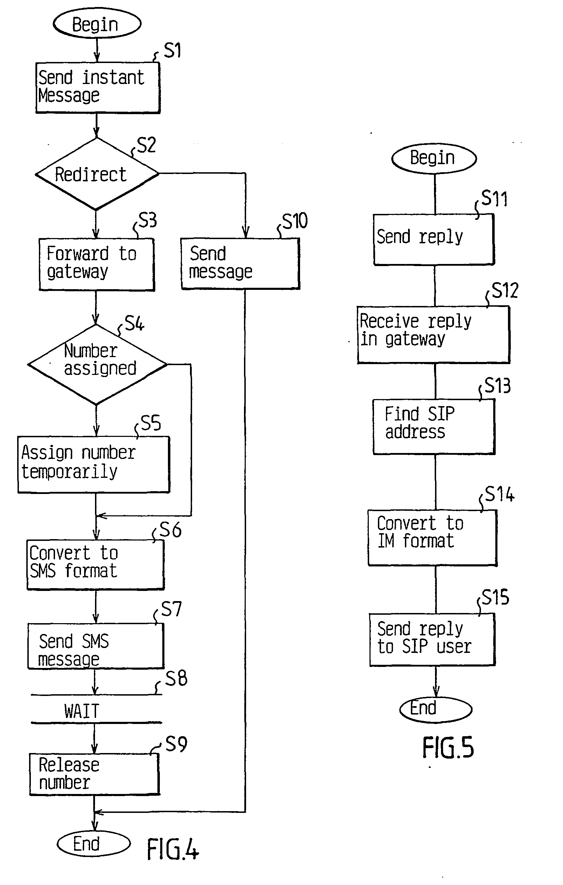

Figure 4 is a flow chart of how a temporary address is assigned according to the first embodiment of the invention.
- Step S1:: An instant message is sent from a SIP user to a mobile user
- Step S2:: Should the message be redirected to a mobile network? If yes, go to step S3; if no, go to step S 10.
- Step S3:: Forward the message to the gateway.
- Step S4:: Is a GSM number available for the SIP user? If yes, go to step S6; if no, go to step S5:
- Step S5:: Assign a temporary number to identify the SIP user. Store in the gateway database.
- Step S6:: Convert the message to an SMS message
- Step S7:: Send the SMS message to the mobile user.
- Step S8:: Wait for a predetermined period of time.
- Step S9:: Release the temporary number. End of procedure.
- Step S10:: Send message according to standard. End of procedure.

In step S7, the time to wait should be set to an appropriate value. The value may be selected by the operator in dependence, for example, of the number of addresses available. The time should not be so long that the gateway runs out of addresses that may be assigned. If a large number of temporary addresses are available, each address can be kept longer. The time to wait determines how long the second user can reply to the SMS. For example, the temporary address may be kept as long as the SMS is kept, which is typically 1-2 weeks.

The time to wait may be calculated either from the time when the temporary number is assigned in step S5, or from the time when the temporary number is accessed in the table, for sending another message to the same mobile user. In the latter case, the time should be reset each time the temporary number is accessed, so that the time is extended each time a reply is sent to the SIP user. The reason for waiting is to accomodate the SMS receiver with an ability to reply to the instant message.

Figure 5 is a flowchart of the steps taken when the mobile subscriber wants to reply to the SMS message received from a SIP user.
- Step S11:: The mobile subscriber sends the reply. In addition to the payload, the reply contains as address information the mobile subscriber's address and the address temporarily assigned in the gateway. The address information is preferably added automatically, so that the mobile subscriber only has to press a "reply" button to send the reply. Alternatively, address information may have to be entered.
- Step S12:: The reply is received in the gateway.
- Step S 13:: The gateway retrieves the appropriate address of the SIP user from the database.
- Step S14:: Convert the message to Instant Message (IM) format.
- Step S15:: The reply is sent to the SIP user according to the address retrieved in step S13. End of procedure.

According to the first embodiment, the address of the SIP user is retrieved from the database on the basis of the mobile subscriber's number and the number temporarily assigned to the first user, see Figure 3.

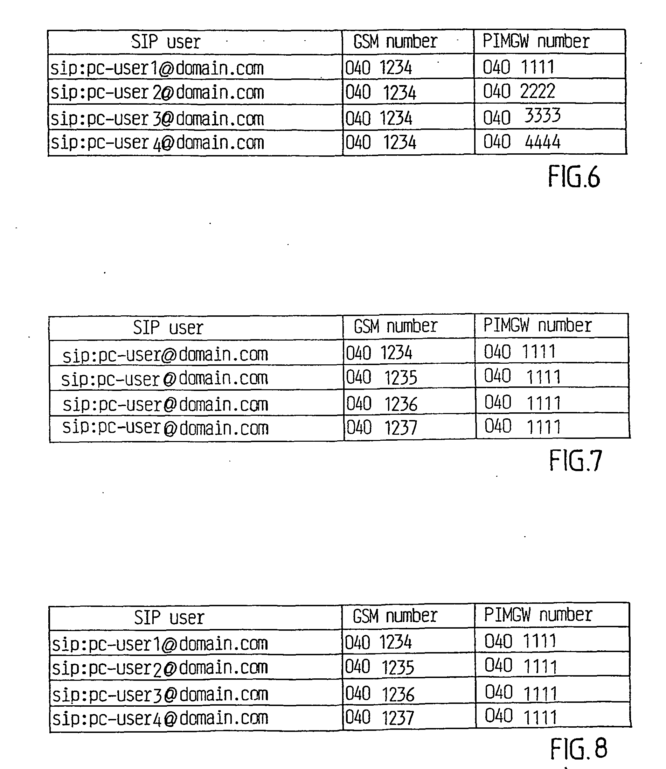

Figure 6 shows the situation where several different SIP users send messages to the same mobile user, according to the first embodiment. The table has the same three columns as discussed for Figure 3. The four table entries are for the first, second, third and fourth SIP user, respectively, as shown in the left column. The number of the receiving mobile subscriber is the same in each case, as seen from the middle column. The number temporarily assigned, shown in the right column, is different in each case, and has the same format as the mobile number in the middle column.

When the mobile subscriber replies to one of the messages, the reply will be sent to the gateway together with the temporarily assigned number. The temporary number and the mobile subscriber's number together then uniquely define the SIP user who should receive the reply.

Figure 7 shows the situation where the same SIP user sends messages to several different mobile users. The four table entries show the first, second third and fourth mobile subscriber, respectively, in the middle column. As can be seen from the left column, the SIP user is always the same. The temporary address, in the right column, is also the same in all four cases. In each case, the combination of the temporary address shown in the right column and the mobile subscriber number in the middle column together uniquely define the SIP user. Of course, different gateway numbers could be assigned in each case, but it is more economic to assign as few gateway numbers as possible.

The following pseudo-code example further describes how temporary addresses are assigned according to the invention:

```
 If (a gateway number has already been associated with the given SIP address and
 GSM number pair)
 {
  then that gateway number is returned
 }
 else If (the GSM number exists in the cache)
 {
  then a different gateway number than those associated with the same GSM num-
  ber is returned
 }
 else If (SIP address exists among the old entries)
 {
  then the same gateway number already used for the SIP address is returned
 }
 else
 {
  neither the GSM number nor the SIP address exists, so an arbitrary gateway num-
  ber may be assigned
 }
```

## Claims

1. A method of sending an instant message between a first user connected to a first communications network and having a first address according to a first standard and a second user connected to a second communications network and having a second address according to a second standard, said method being **characterized in that** it comprises the following steps:
providing a set of temporary addresses according to the second standard that can be assigned as identifiers of the first user;
when the first user sends an instant message to the second user, assigning a temporary address to the first user and storing information about the temporary address in or in connection to a gateway node between said first and said second network;
using the temporary address in conjunction with the second subscriber's address to form a unique identification of the first user.

2. A method according to claim 1, comprising the steps, when the second user replies, of
sending information concerning the reply to the gateway;
using the temporary address assigned to the first user to identify the first user sending the reply to the first user.

3. A method according to any one of the preceding claims, comprising the step of releasing the temporary address after a predefined period of time after assigning the temporary address.

4. A method according to claim 1 or 2, comprising the step of releasing the temporary address after a predefined period of non-use.

5. A computer program product for use in a gateway connecting a first and a second communications network employing a first and a second addressing standard, respectively, said gateway enabling a second user in the second network to respond to a message sent to the second user from a first user in the first network, said computer program product comprising computer readable code means stored on a computer readable medium for performing the steps of the method according to any one of the claims 1-4 when the computer program is run on processing means included in said gateway.

6. A gateway for connecting a first and a second communications network employing a first and a second addressing standard, respectively, said gateway enabling a second user in the second network to respond to a message sent to the second user from a first user in the first network, said first user having a first address according to the first addressing standard, said second user having a second address according to the second addressing standard and said gateway comprising an address table having the first address of the first user, **characterized in that** the table is arranged to hold the second address of a second user and a temporary address assigned to the first user, in such a way that the temporary address and the second address form a unique identification of the first user, and **in that** the gateway comprises processing means for running a computer program of a computer program product according to claim 5.

## Patentansprüche

1. Ein Verfahren zum Senden einer Sofortnachricht zwischen einem ersten Anwender, der mit eines ersten Kommunikationsnetzwerk verbunden ist und eine erste Adresse gemäß einem ersten Standard aufweist, und einem zweiten Anwender, der mit einem zweiten Kommunikationsnetzwerk verbunden ist und eine zweite Adresse gemäß einem zweiten Standard aufweist, wobei das verfahren **dadurch gekennzeichnet ist, dass** es die folgenden Schritte umfasst:
Bereitstellen eines Satzes von temporären Adressen gemäß dem zweiten Standard, die als Identifizierer des ersten Anwenders zugeordnet werden können;
wenn der erste Anwender eine Sofortnachricht zum zweiten Anwender sendet, Zuordnen einer temporären Adresse zu dem ersten Anwender und Speichern von Information über die temporäre Adresse in oder in Verbindung mit einem Gateway-Knoten zwischen dem ersten und dem zweiten Netzwerk;
Verwenden der temporären Adresse in Verbindung mit der zweiten Teilnehmeradresse, um eine eindeutige Identifizierung des ersten Anwenders zu bilden.

2. Ein Verfahren nach Anspruch 1, wenn der zweite Anwender antwortet, umfassend die Schritte:
Senden von Information bezüglich der Antwort zu dem Gateway;
Verwenden der temporären Adresse, die dem ersten Anwender zugeordnet ist, um den ersten Anwender zu identifizieren, Senden der Antwort zu dem ersten Anwender.

3. Ein Verfahren nach einem der vorangehenden Ansprüche, umfassend den Schritt des Freigebens der temporären Adresse nach einer vordefinierten Zeitperiode nach Zuordnen der temporären Adresse.

4. Ein Verfahren nach Anspruch 1 oder 2, den Schritt umfassend des Freigeben der temporären Adresse nach einer vordefinierten Periode des nicht Verwendens.

5. Ein Computerprogrammprodukt zum Verwenden in einem Gateway, das ein erstes und ein zweites Kommunikationsnetzwerk verbindet, die entsprechend einen ersten und einen zweiten Adressierungsstandard verwenden, wobei das Gateway es einem zweiten Anwender in dem zweiten Netzwerk ermöglicht, auf eine Nachricht zu antworten, die zu dem zweiten Anwender von einem ersten Anwender in dem ersten Netzwerk gesendet wurde, wobei das Computerprogrammprodukt eine computerlesbare Codeeinrichtung umfasst, die auf einem computerlesbaren Medium gespeichert ist, zum Ausführen der Schritte des Verfahrens gemäß einem der Ansprüche 1 bis 4, wenn das Computerprogramm auf einer Bearbeitungseinrichtung läuft, die in dem Gateway enthalten ist.

6. Ein Gateway zum Verbinden von einem ersten und einem zweiten Kommunikationsnetzwerk, die entsprechend einen ersten und einen zweiten Adressierungsstandard verwenden, wobei das Gateway es einem zweiten Anwender in dem zweiten Netzwerk ermöglicht, auf eine Nachricht zu antworten, die zu dem zweiten Anwender von einem ersten Anwender in dem ersten Netzwerk gesendet wurde, wobei der erste Anwender eine erste Adresse gemäß dem ersten Adressierungsstandard aufweist, wobei der zweite Anwender eine zweite Adresse gemäß dem zweiten Adressierungsstandard aufweist, und wobei das Gateway eine Adressentabelle umfasst, die die erste Adresse des ersten Anwenders aufweist, **dadurch gekennzeichnet, dass** die Tabelle angepasst ist zum Enthalten der zweiten Adresse eines zweiten Anwenders und einer temporären Adresse, die dem ersten Anwender zugeordnet ist, auf solch eine Art und Weise, dass die temporäre Adresse und die zweite Adresse eine eindeutige Identifizierung des ersten Anwenders bilden, und dass das Gateway eine Bearbeitungseinrichtung zum Ausführen eines Computerprogramms von einem Computerprogrammprodukt gemäß Anspruch 5 umfasst.

## Revendications

1. Procédé pour envoyer un message instantané entre un premier utilisateur connecté à un premier réseau de communications et ayant une première adresse correspondant à une première norme et un deuxième utilisateur connecté à un deuxième réseau de communications et ayant une deuxième adresse conforme à une deuxième norme, ledit procédé étant **caractérisé en ce qu'**il comprend les étapes consistant à :
fournir un ensemble d'adresses temporaires conformes à la deuxième norme qui peuvent être attribuées en tant qu'identificateurs du premier utilisateur ;
lorsque le premier utilisateur envoie un message instantané au deuxième utilisateur, attribuer une adresse temporaire au premier utilisateur et stocker des informations concernant l'adresse temporaire dans, ou en connexion avec, un noeud passerelle entre lesdits premier et deuxième réseaux ;
utiliser l'adresse temporaire en association avec l'adresse du deuxième abonné pour former une identification unique du premier utilisateur.

2. Procédé selon la revendication 1, comprenant les étapes, lorsque le deuxième utilisateur répond, consistant à :
envoyer des informations concernant la réponse à la passerelle ;
utiliser l'adresse temporaire attribuée au premier utilisateur pour identifier le premier utilisateur envoyant la réponse au premier utilisateur.

3. Procédé selon l'une quelconque des revendications précédentes, comprenant l'étape consistant à libérer l'adresse temporaire après une période de temps prédéfinie faisant suite à l'attribution de l'adresse temporaire.

4. Procédé selon la revendication 1 ou 2, comprenant l'étape consistant à libérer l'adresse temporaire après une période prédéfinie de non-utilisation.

5. Produit à base de programme informatique destiné à être utilisé dans une passerelle connectant des premier et deuxième réseaux de communications en utilisait respectivement des première et deuxième normes d'adressage, ladite passerelle permettant à un deuxième utilisateur du deuxième réseau de répondre à un message envoyé au deuxième utilisateur par un premier utilisateur du premier réseau, ledit produit à base de programme informatique comprenant un moyen à base de code lisible par ordinateur stocké sur un support lisible par ordinateur pour mettre en oeuvre les étapes du procédé selon l'une quelconque des revendications 1 à 4 lorsque le programme informatique est exécuté sur un moyen de traitement contenu dans ladite passerelle.

6. Passerelle pour connecter des premier et deuxième réseaux de communications utilisant respectivement des première et deuxième normes d'adressage, ladite passerelle permettant à un deuxième utilisateur du deuxième réseau de répondre à un message envoyé au deuxième utilisateur par un premier utilisateur du premier réseau, ledit premier utilisateur ayant une première adresse conforme à la première norme d'adressage, ledit deuxième utilisateur ayant une deuxième adresse conforme à la deuxième norme d'adressage et ladite passerelle comprenant une table d'adresses contenant la première adresse du premier utilisateur, **caractérisée en ce que** la table est conçue pour contenir la deuxième adresse d'un deuxième utilisateur et une adresse temporaire attribuée au premier utilisateur, de telle manière que l'adresse temporaire et la deuxième adresse forment une identification unique du premier utilisateur et que la passerelle comprend un moyen de traitement destiné à exécuter un programme informatique d'un produit à base de programme informatique selon la revendication 5.
